# EUROPEAN PATENT APPLICATION

(11) **EP 2 093 765 A1**
(43) Date of publication of application: **26.08.2009**
(21) Application number: 09153269.7
(22) Date of filing: 20.02.2009
(51) Int. Cl.: G11B 27/034, G11B 27/34, G06F 3/048, G06F 9/44, G06F 9/445

(54) **Video editing apparatus, terminal device and gui program transmission method**

(30) Priority: 22.02.2008 JP 2008041736
(71) Applicant: NTT DoCoMo, Inc., Chiyoda-ku Tokyo 100-6150 (JP)
(72) Inventor: Kojo, Yu, TOKYO 100-6150 (JP); Yabusaki, Masami, TOKYO 100-6150 (JP); Tamura, Motoshi, TOKYO 100-6150 (JP); Isobe, Shin-ichi, TOKYO 100-6150 (JP)
(74) Representative: Beder, Jens

(57) **Abstract**

The present application provides: a video editing apparatus which makes it possible for the video editing apparatus to carry out appropriate video editing in accordance with the processing capabilities of a terminal device; the terminal device; and a GUT program transmission method for the video editing apparatus. A video editing apparatus, which edits video content on the basis of edit instruction information from a terminal device connected thereto via a network, comprises receiving means for receiving attribute information denoting the processing capabilities of the terminal device; a GUI program extracting portion for referring to a GUI program table that stores the attribute information of the terminal device in association with a GUI program for the terminal device to create edit instruction information, and extracting the GUI program associated with the attribute information received by the receiving means ; and a GUI program transmitting portion for transmitting the GUI program extracted by the GUI program extracting portion to the terminal device.

## Description

### BACKGROUND OF THE INVENTION

### Field of the Invention

The present invention relates to a video editing apparatus for editing video content based on edit instruction information from a terminal device connected thereto via a network, the terminal device, and a GUI program transmission method for the video editing apparatus to transmit a GUI program to the terminal device.

### Related Background Art

A content production method for a content production system, comprising a server system having an apparatus for editing video content, and a client system that utilizes this server system, is known (refer to Japanese Patent Laid-open No. 2003-309805). In this method, a work operation screen is provided from the server system to the client system for operating the content editing apparatus. The client system can transmit video content edit instructions to the server system via this work operation screen. The server system edits the video content on the basis of the transmitted edit instructions.

In order to create a video content edit instruction, the client system must perform such processing as downloading the video content to be processed, displaying the downloaded video content, retrieving the part to be edited, and inputting the editing content. This processing is carried out by way of a GIA (Graphical User Interface) displayed on the client system. This GUI is realized by executing a GUI program provided to the client system from the server system. For example, the client system requires fixed processing capabilities to execute a GUI program for realizing an easy-to-use GUI that makes heavy use of graphical displays.

The onboard CPU operating frequency and memory capacity of an ordinary mobile terminal device is limited by the size and permissible heating value of the mobile terminal device. The processing capabilities of the mobile terminal device depend on the CPU and memory. Therefore, when the client system constitutes a mobile terminal device, the shortage of processing capabilities is apt to cause problems. In a system for providing a service that relegates the editing of video content to unspecified mobile terminal devices in particular, the provision of a low-processing-load GUI that is capable of being used by a mobile terminal device that has low processing capabilities will result in poor GUI usability in a mobile terminal device with high processing capabilities. Further, since providing a high-processing-load GUI program that places priority on ease of use will make it impossible for a mobile terminal device that does not have fixed processing capabilities to carry out processing for generating edit instructions, the system will be unusable. Thus, the uniform provision of a GUI program in a video content editing service will inhibit the widespread use of video editing in mobile terminal devices.

### SUMMARY OF THE INVENTION

Accordingly, an object of the present invention is to provide a video editing apparatus that is capable of carrying out appropriate video editing in accordance with the processing capabilities of a terminal device, and a GUI program transmission method for this video editing apparatus and this terminal device.

To solve for the above-mentioned problem, a video editing apparatus of the present invention is for editing video content on the basis of edit instruction information from a terminal device connected thereto via a network, and comprises attribute information receiving means for receiving attribute information denoting the processing capabilities of a terminal device; GUI program storage means for storing the attribute information of the terminal device in association with a GUI program for the terminal device to create edit instruction information; GUI program extracting means for referring to the GUI program storage means and extracting the GUI program associated with the attribute information received by the attribute information receiving means; and GUI program transmitting means for transmitting to the terminal device the GUI program extracted by the GUI program extracting means.

Further, in order to solve for the above-mentioned problem, a terminal device for transmitting edit instruction information via a network to the video editing apparatus for editing video content comprises attribute information transmitting means for transmitting to the video editing apparatus the terminal device attribute information; GUI program receiving means for receiving a GUI program for creating edit instruction information, which has been transmitted in accordance with the attribute information transmitted by attribute information transmitting means; and GUI program executing means for executing the GUI program received by the GUI program.

Furthermore, in order to solve for the above-mentioned problem, a GUI program transmission method of the present invention is a GUI program transmission method for a video editing apparatus for editing video content on the basis of edit instruction information from a terminal device connected thereto via a network, wherein the video editing apparatus executes: an attribute information receiving step of receiving attribute information denoting the processing capabilities of the terminal device; a GUI program extracting step of referring to GUI program storage means for storing the attribute information of the terminal device in association with a GUI program for the terminal device to create edit instruction information, and extracting the GUI program associated with the attribute information received in the attribute information receiving step; and a GUI program transmitting step of transmitting the GUI program extracted in the GUI program extracting step to the terminal device.

The video editing apparatus stores the attribute information denoting the processing capabilities of the terminal device in association with a GUI program suitable for the processing capabilities denoted by the attribute information. Since the video editing apparatus extracts a GUI program corresponding to the attribute information received from the terminal device and transmits the extracted GUI program to the terminal device, the terminal device is provided with a GUI program that accords with the processing capabilities of the terminal device. Thus, the terminal device can execute a GUI program that falls within the scope of the processing capabilities thereof, thereby making it possible for the terminal device to create edit instruction information for the video editing apparatus. Therefore, it is possible for the video editing apparatus to carry out appropriate video editing that corresponds to the processing capabilities of the terminal device.

Further, it is preferable that the video editing apparatus of the present invention be constituted such that the GUI program comprises a plurality of GUI program elements, and the GUI program storage means stores a GUI program comprising a GUI program element that differs from the GUI program element included in a certain GUI program.

The GUI program element is either a program for realizing a portion of the processing carried out by the GUI program, or data utilized in processing. In accordance with this constitution, it becomes possible to provide the terminal device with the GUI program that is made up of GUI program elements of a type and number corresponding to the processing capabilities of the terminal device.

Further, it is preferable that the video editing apparatus of the present invention further comprise transmission request receiving means for receiving a transmission request for a GUI program element; and GUI program element transmitting means for extracting the GUI program element based on the received transmission request, and transmitting same to the terminal device.

Further, in the terminal device of the present invention, it is preferable that the GUI program comprise a plurality of GUI program elements, that processing executed by one of the GUI program elements comprise a call instruction process for calling another GUI program element, and that the terminal device further comprise: transmission requesting means for transmitting to the video editing apparatus a request for the transmission of the other GUI program element when the GUI program executing means executes the call instruction process; and GUI program element receiving means for receiving the other GUI program element transmitted in response to the transmission request, and that GUI program executing means execute the received other GUI program element.

When the execution by one of the GUI program elements requires another GUI program element, the one GUI program element comprises the call instruction process for calling the other GUI program element. When this call instruction process is executed, the terminal device issues a request to the video editing apparatus to transmit the other GUI program element. In response to this request, the video editing apparatus transmits the other GUI program element to the terminal device. Thus, the terminal device is able to sequentially receive the GUI program elements required to create the edit instruction information. Therefore, the terminal device does not have to receive all the GUI program elements of the GUI program elements needed for carrying out the processing to create a certain edit instruction information at the time processing commences, and is able to commence this processing upon receiving a portion of the GUI program elements. Further, since the acquisition of the other GUI program element is carried out independent of a user operation, the user can continue to carry out the inputting for creating the edit instruction information while the addition to the GUI program is being acquired regardless of the level of processing capabilities of the terminal device.

Further, in the video editing apparatus of the present invention, it is preferable that the attribute information comprise either one of the CPU operating frequency or the memory capacity. In accordance with this constitution, it becomes possible for the video editing apparatus to appropriately determine the processing capabilities of the terminal device.

According to the video editing apparatus, terminal device and GUI program transmission method of the present invention, because it is possible to provide the terminal device with a GUI suited to the processing capabilities of the terminal device, the terminal device can execute a GUI program that falls within the scope of the processing capabilities thereof, making it possible for the terminal device to create edit instruction information for the video editing apparatus. Therefore, the video editing apparatus is able to carry out appropriate video editing corresponding to the processing capabilities of the terminal device. As a result, a system that provides an video content editing service to mobile terminal devices will achieve the widespread use of video editing by mobile terminal devices since the mobile terminal devices capable of using this service will not longer be limited by processing capabilities.

### BRIEF DESCRIPTION OF THE DRAWINGS

Fig. 1 is a functional block diagram of a video editing apparatus and a terminal device;
Fig. 2 is a block diagram of the hardware configuration of the video editing apparatus;
Fig. 3 is a block diagram of the hardware configuration of the terminal device;
Fig. 4 is a diagram schematically showing an example of a GUI program storage portion;
Fig. 5 is a diagram schematically showing an example of a GUI program table;
Fig. 6 is a diagram showing the processing steps for the terminal device to execute a video editing program, and the processing steps for the video editing apparatus to carry out operations corresponding to this process;
Fig. 7 is a diagram showing the processing steps for the terminal device to execute the GUI program, and to issue a request to the video editing apparatus to transmit the GUI program element; and
Fig. 8 is a diagram schematically showing a menu screen displayed on the terminal device display.

### DESCRIPTION OF THE PREFERRED EMBODIMENTS

The video editing apparatus 10 and terminal device 20 related to an embodiment of the present invention will be explained by referring to the drawings. Furthermore, when possible, duplicate explanations will be omitted by assigning the same reference numerals to the same parts.

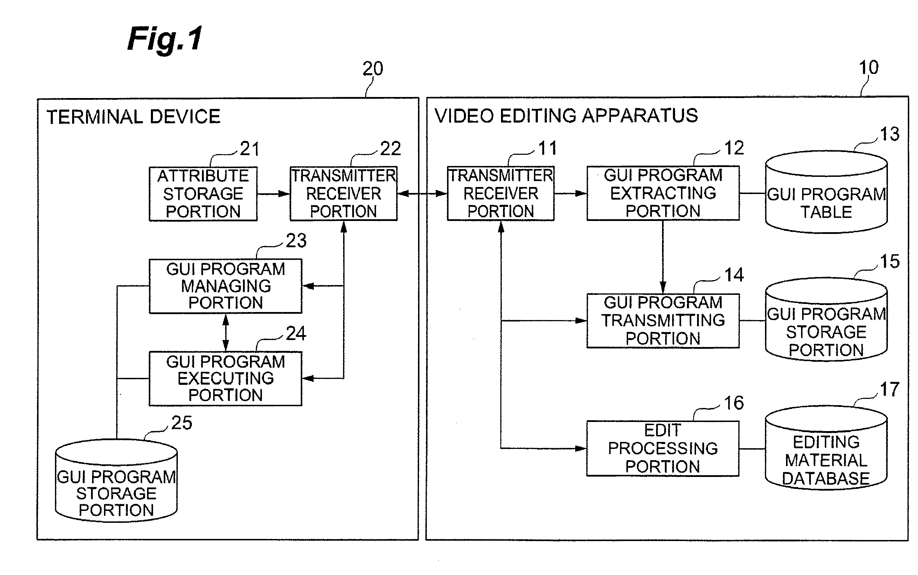

Fig. 1 is a block diagram showing the functional constitution of the video editing apparatus 10 and the terminal device 20 related to this embodiment. The video editing apparatus 10 and the terminal device 20 are able to communicate via either a wired or wireless network. The video editing apparatus 10 is for editing video content on the basis of edit instruction information from the terminal device 20, and, for example, constitutes a server computer. The terminal device 20, for example, constitutes a mobile terminal device having a calling function. The network that makes it possible for the video editing apparatus 10 and the terminal device 20 to communicate, for example, is a mobile communication network.

The terminal device 20 can transmit to the video editing apparatus 10 edit instruction information for editing video content by executing an video editing program. The video editing program constitutes a menu screen display program, a GUI program, and an edit instruction information transmission program. Executing the GUI program carries out processing for creating edit instruction information for editing video content in accordance with a user's input instruction. The video content editing process includes a variety of process items, these process items comprising, for example, connect a plurality of video content, delete a portion of the video content, and add text to the video. The GUI program constitutes a plurality of GUI program elements, and the respective process items are realized by executing one or more prescribed GUI program elements.

The respective functional elements of the video editing apparatus 10 will be explained using Fig. 1. The video editing apparatus 10 functionally comprises a transmitter/receiver portion 11 (attribute information receiving means, GUI program transmitting means, transmission request receiving means, GUI program element transmitting means), GUI program extracting portion 12 (GUI program extracting means), GUI program table 13 (GUI program storage means), GUI program transmitting portion 14 (GUI program extracting means, GUI program element transmitting means), GUI program storage portion 15, edit processing portion 16 and editing material database 17.

The transmitter/receiver portion 11 receives the attribute information of the terminal device 20 transmitted from the terminal device 20, and sends the received attribute information to the GUI program extracting portion 12. Further, the transmitter/receiver portion 11 receives the GUI program element transmission request transmitted from the terminal device 20, and sends the received GUI program element transmission request to the GUI program transmitting portion 14. Furthermore, the transmitter/receiver portion 11 transmits the GUI program and GUI program element to the terminal device 20. The attribute information, GUI program and GUI program element will be explained below.

The GUI program extracting portion 12 references the GUI program table 13, and acquires information denoting the configuration of the GUI program element associated with the attribute information of the terminal device 20 transmitted from the transmitter/receiver portion 11. Further, the GUI program extracting portion 12 sends the information denoting the configuration of the extracted GUI program element to the GUI program transmitting portion 14.

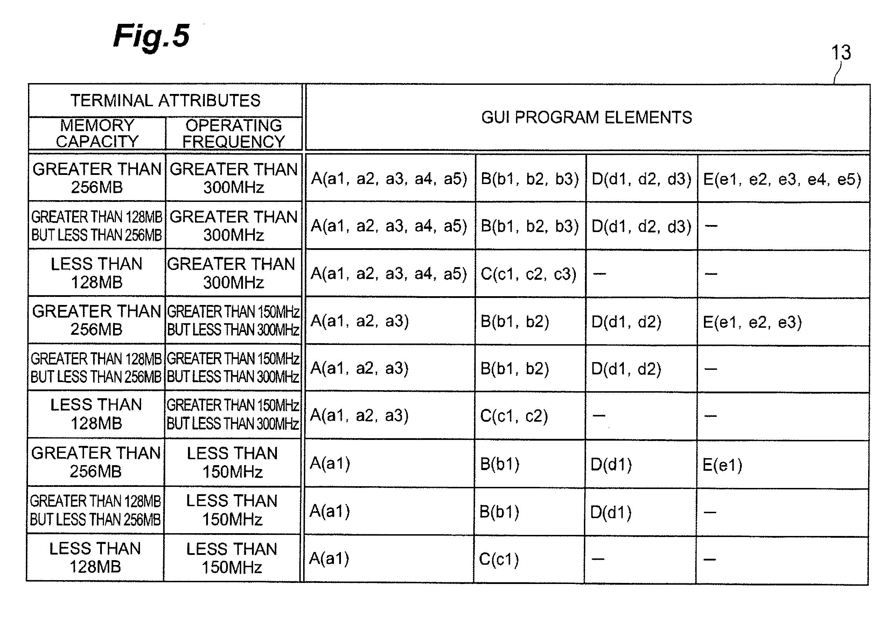

The GUI program table 13 stores attribute information of the terminal device 20 in association with the information denoting the configuration of the GUI program element. The GUI program is configured from a plurality of GUI program elements, and the GUI program table 13 stores the information denoting this configuration. Fig. 5 is an example of the GUI program table 13. The attribute information denotes the processing capabilities of the terminal device 20, and, for example, comprises the memory capacity and operating frequency. The memory capacity, for example, is the capacity of the RAM 202 in the terminal device 20. The operating frequency, for example, is the operating frequency of the CPU 201 in the terminal device 20. For example, GUI program elements a1 through a3 for executing the processing of process item A, GUI program elements b1 and b2 for executing the processing of process item B, GUI program elements d1 and d2 for executing the processing of process item D, and GUI program elements e1 through e3 for executing the processing of process item E are associated with attribute information denoting a memory capacity of 255MB or larger and an operating frequency of greater than 150MHz but less than 300MHz.

In this GUI program table 13, the contents of the GUI program transmitted to the terminal device 20 can be changed by changing as needed the information denoting the configuration of the GUI program element stored in association with the attribute information. Therefore, changing the contents of the GUI program table 13 makes it possible to add a new process item to the GUI program. Further, as shown in the example of the GUI program table 13 of Fig. 5, the configuration of the GUI program element can comprise more GUI program elements the higher the processing capabilities of the terminal device 20, and can comprise less GUI program elements the lower the processing capabilities of the terminal device 20. Using configurations like this makes it possible to provide the terminal device 20 with a GUI program suited to the processing capabilities thereof.

The GUI program transmitting portion 14 acquires information denoting the configuration of the GUI program element sent from the GUI program extracting portion 12. The GUI program transmitting portion 14 fetches the GUI program element from the GUI storage portion 15 based on the received information denoting the configuration of the GUI program element, and sends this GUI program element to the transmitter/receiver portion 11. Further, the GUI program transmitting portion 14 acquires the GUI program element transmission request sent from the transmitter/receiver portion 11. The GUI program transmitting portion 14 fetches the GUI program element comprised in this transmission request from the GUI program storage portion 15 and sends this GUI program element to the transmitter/receiver portion 11.

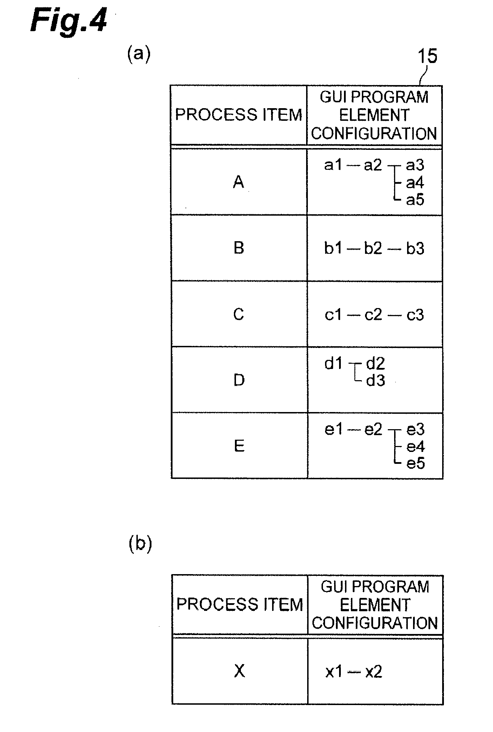

The GUI program storage portion 15 stores the GUI program for the terminal device 20 to create the edit instruction information for the video editing apparatus 10. In (a) of Fig. 4 is a diagram showing an example of the GUI program storage portion 15. The process item and GUI program element comprising the GUI program will be explained here using (b) of Fig. 4. The example shown in (b) of Fig. 4 represents processing, which is denoted by process item X, being realized by GUI program elements x1 and x2. The fact that GUI program element x1 is connected to GUI program element x2 by a hyphen shows that the process executed by GUI program element x1 comprises a call instruction process for calling GUI program element x2. First, since GUI program element x1 is executed at the start of this processing, the terminal device 20 does not need GUI program element x2. The call instruction process for calling GUI program element x2 is carried out when GUI program element x1 is executed, thereby enabling the terminal device 20 to acquire GUI program element x2.

Referring once again to (a) of Fig. 4, GUT program elements a1 through a5 are required to execute the processing of process item A. The processing executed by GUI program element a1 comprises the call instruction process for calling GUI program element a2. Further, the processing executed by GUI program element a2 comprises the call instruction process for calling GUI program elements a3 through a5. Process item A, for example, posts image materials such as text and symbols to the video content. When GUI program element a2 is executed, for example, a screen for selecting the materials to be posted is realized. GUI program elements a3 through a5, for example, respectively comprise image material data.

Further, the processing capabilities required to execute the processing of the GUI program elements a3 through a5 comprising process item A, for example, can differ from one another, enabling the program to be used to functionally execute the same processing. For example, the processing executed by GUI program element a3 can be configured to make heavy use of textual displays, the processing executed by GUI program element a4 can be configured to comprise simple graphics displays, and the processing executed by GUI program element a5 can be configured to comprise complex graphics displays. Of these GUI program elements, GUI program element a3 can be executed on a terminal device 20 with low processing capabilities, and GUI program element a5 can be executed on a terminal device 20 having high processing capabilities.

Further, process items B and C, for example, are partial deletion processes for deleting arbitrary portions of the video content. In a partial deletion process, the user determines the portion to be deleted, thereby requiring that the editing-targeted video content be displayed on the display of the terminal device 20. The video displayed on the terminal device display has less number of frames per unit of time than the pre-editing video content. Process item C can comprise a GUI program element that displays a video having a reduced number of frames per unit of time than process item B on the terminal device display.

The edit processing portion 16 acquires via the transmitter/receiver portion 11 the edit instruction information that has been transmitted from the terminal device 20. Further, the edit processing portion 16 edits the video content stored in the editing material database 17 on the basis of the acquired edit instruction information. The editing material database 17 stores the data of the video content targeted for editing. The video content data stored in the editing material database 17 comprises not only pre-edit data, but also data that is in the process of being edited. Further, this video content data comprises video content data that the video editing apparatus 10 stored in the editing material database 17 beforehand, and video content data that has been transmitted from the terminal device 20.

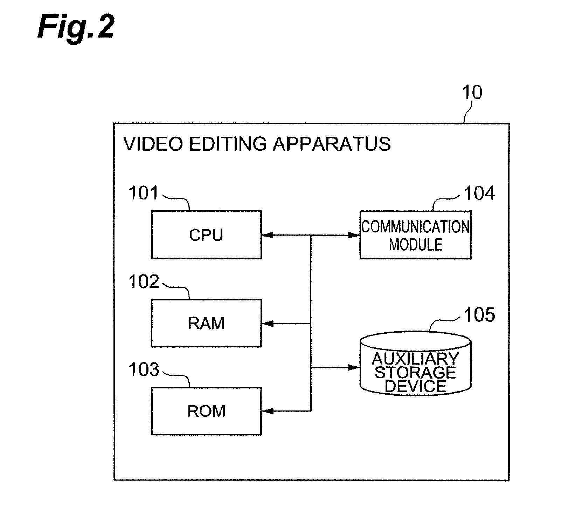

Fig. 2 is a diagram of the hardware configuration of the video editing apparatus 10. The video editing apparatus 10 is a computer system physically comprising a CPU 101, RAM 102 and ROM 103, which is the main storage device, a hard disk, flash memory or other such auxiliary storage device 105, and a communication module 104, which is a network card or other such data transmitting/receiving device. The respective functions of the video editing apparatus 10 illustrated in Fig. 1 are realized by using the CPU 101, RAM 102 and other hardware shown in Fig. 2 to read in a prescribed computer software program, operate the communication module 104 and so forth under CPU 101 control, and read/write data from/to the RAM 102 and auxiliary storage device 105. The video editing apparatus 10, for example, is realized in accordance with a server computer.

Next, the respective functional elements of the terminal device 20 will be explained using Fig. 1. The terminal device 20 functionally comprises an attribute storage portion 21, a transmitter/receiver portion 22 (attribute information transmitting means, GUI program receiving means, transmission requesting means, GUI program element receiving means), GUI program managing portion 23 (transmission requesting means), GUI program executing portion 24 (GUI program executing means) and GUI program storage portion 25.

The attribute storage portion 21 stores the attribute information of the terminal device 20. The attribute information, for example, comprises the memory capacity of the RAM 202 and the operating frequency of the CPU 201 provided in the terminal device 20. Furthermore, the attribute information can also comprise values denoting the size and resolution of the terminal device 20 display, the version of the operating system that operates the terminal device 20, and the communication status between the terminal device 20 and the video editing apparatus 10. Further, the attribute storage portion 21 sends the attribute information to the transmitter/receiver portion 22.

The transmitter/receiver portion 22 transmits the attribute information sent from the attribute storage portion 21 to the video editing apparatus 10. Further, the transmitter/receiver portion 22 receives the GUI program element transmitted from the video editing apparatus 10, and sends the received GUI program element to the GUI program managing portion 23. Further, the transmitter/receiver portion 22 transmits a GUI program element transmission request sent from the GUI program managing portion 23 to the video editing apparatus 10. In addition, the transmitter/receiver portion 22 transmits edit instruction information sent from the GUI program executing portion 24 to the video editing apparatus 10.

The GUI program managing portion 23 acquires the GUI program element that has been sent from the transmitter/receiver portion 22, and stores the acquired GUI program element in the GUI program storage portion 25. Further, the GUI program managing portion 23 acquires the GUI program element transmission request that has been sent from the GUI program executing portion 24, and sends the acquired GUI program element transmission request to the transmitter/receiver portion 22.

The GUI program executing portion 24 fetches from the GUI program storage portion 25 a GUI program comprising a GUI program element, and executes the fetched GUI program. When a call instruction process for calling the other GUI program element is comprised in the process being executed by the respective executed GUI program elements, the GUI program executing portion 24 sends a transmission request for the other GUI program element to the GUI program managing portion 23. Furthermore, the GUI program executing portion 24 creates edit instruction information by executing the GUI program, and sends the created edit instruction information to the transmitter/receiver portion 22.

The GUI program storage portion 25 stores the GUI program element that was acquired by the GUI program managing portion 23.

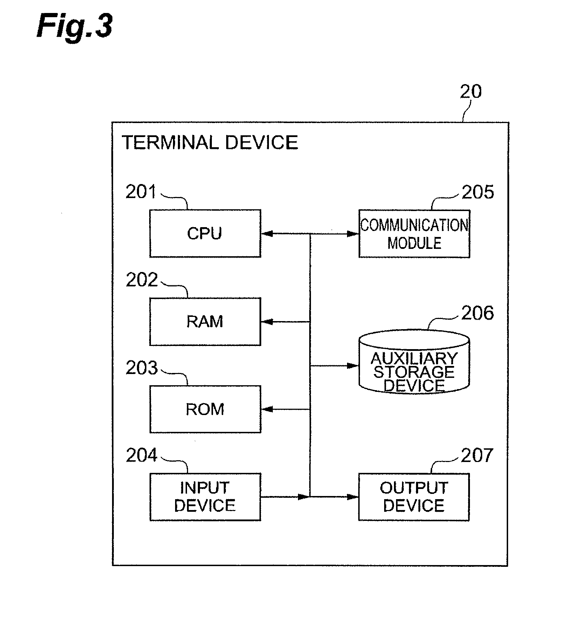

Further, Fig. 3 is a diagram of the hardware configuration of the terminal device 20. The terminal device 20 is a computer system physically comprising a CPU 201, RAM 202 and ROM 203, which are the main storage device, a hard disk, flash memory or other such auxiliary storage device 206, a keyboard or other such input device 204, which is the inputting device, an output device 207 such as a display, and a communication module 205, which is a network card or other such data transmitting/receiving device. The respective functions of the terminal device 20 illustrated in Fig. 1 are realized by using the CPU 201, RAM 202 and other hardware shown in Fig. 3 to read in a prescribed computer software program, operate the communication module 205, input device 204 and output device 207 under CPU 201 control, and read/write data from/to the RAM 202 and auxiliary storage device 206.

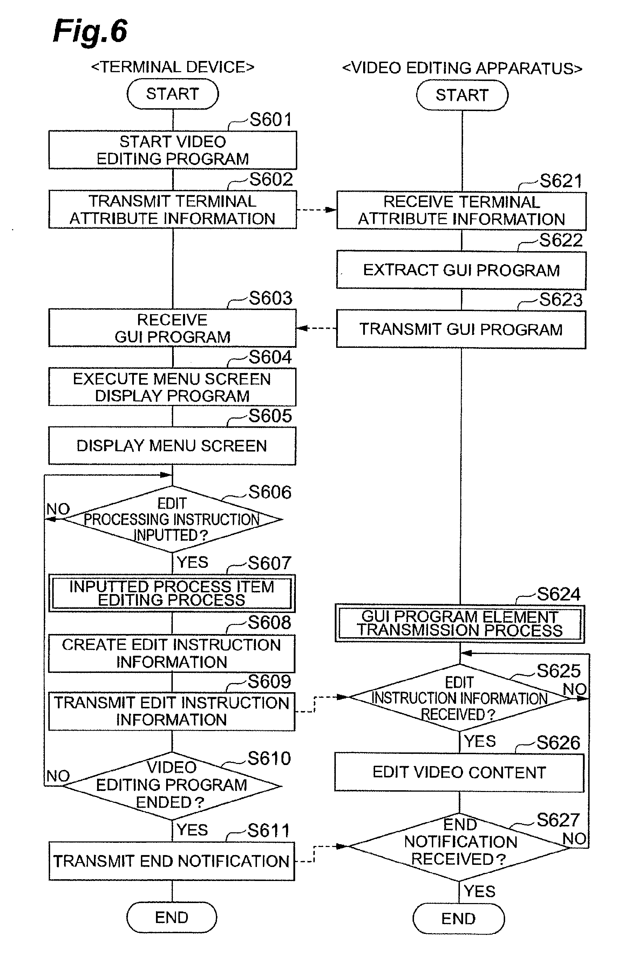

Next, the operation of the video editing apparatus 10 and the terminal device 20 related to this embodiment will be explained. Fig. 6 is a diagram showing the steps by which the video editing apparatus 10 transmits the GUI program to the terminal device 20.

First, the terminal device 20 starts up a video editing program (S601). The starting up of this program, for example, is carried out in accordance with an input operation by the user.

The transmitter/receiver portion 22 of the terminal device 20 acquires the attribute information of the terminal device 20 from the attribute storage portion 21, and transmits the acquired attribute information to the video editing apparatus 10 (S602). For example, when the attribute storage portion 21 is storing "memory capacity: 256 MB, operating frequency: 200MHz" as the attribute information, the transmitter/receiver portion 22 can transmit this attribute information to the video editing apparatus 10. When the video editing apparatus 10 does not have the video content targeted for editing but the terminal device 20 does have this video content, the transmitter/receiver portion 22 can transmit the editing-targeted video content to the video editing apparatus 10 at this time (not shown in the drawing).

The transmitter/receiver portion 11 of the video editing apparatus 10 receives the attribute information of the terminal device 20 that has been transmitted from the terminal device 20, and sends the received attribute information to the GUI program extracting portion 12 (S621). Further, when the editing-targeted video content 20 has been transmitted from the terminal device, the transmitter/receiver portion 11 receives this video content, and stores the received video content in the editing material database 17 by way of the edit processing portion 16 (Not shown in the drawing).

The GUI program extracting portion 12 acquires the attribute information sent from the transmitter/receiver portion 11, extracts the configuration of the GUI program element associated with the acquired attribute information by referring to the GUI program table 13 (S622). For example, when "memory capacity: 256MB, operating frequency: 200MHz" is acquired as the attribute information, since this attribute information corresponds to the attribute information "memory capacity: 256MB or larger, operating frequency: more than 150MHz but less than 300MHz" stored in the GUI program table 13, the configuration of the GUI program element to be extracted is "A (a1, a2, a3), B (b1, b2), D (d1, d2), E (e1, e2, e3, e4)". The GUI program extracting portion 12 sends information denoting the configuration of the extracted GUI program element to the GUI program transmitting portion 14.

The GUI program transmitting portion 14 fetches the GUI program element that comprises the information denoting the GUI program element configuration, and transmits the fetched GUI program element as the GUI program to the terminal device 20 via the transmitter/receiver portion 11 (S623). For example, when "A (a1, a2, a3), B (b1, b2), D (d1, d2), E (e1, e2, e3, e4)" has been acquired as the information denoting the GUI program element configuration, the GUI program transmitting portion 14 sends GUI program elements "(a1, a2, a3), (b1, b2), (d1, d2), (e1, e2, e3, e4)" to the transmitter/receiver portion 11. The transmitter/receiver portion 11 acquires these GUI program elements, and transmits the acquired GUI program elements to the terminal device 20.

The transmitter/receiver portion 22 of the terminal device 20 receives the GUI program comprising the GUI program elements, and stores the received GUI program in the GUI program storage portion 25 via the GUI program managing portion 23 (S603). Furthermore, the received GUI program can comprise a menu screen display program for displaying a video editing program menu screen at this time.

The GUI program executing portion 24 executes the menu screen display program (S604). The terminal device 20 can also have this menu screen display program beforehand as part of the video editing program.

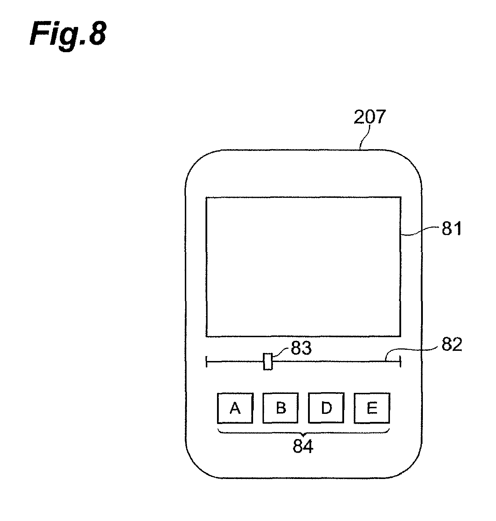

When the menu screen display program is executed, the terminal device 20 displays a menu screen on the display, which is one of the output devices 207 (S605). Fig. 8 is a diagram showing an example of a display on which the menu screen is displayed. The menu screen comprises a display window 81, timeline bar 82, timeline cursor 83 and process item specification buttons 84. The display window 81 displays the editing material that will become the target of the video editing. The length of the timeline bar 82 represents the total time of the editing material, and by operating the timeline cursor 83 so as to move this cursor 83 to an arbitrary location on the timeline bar 82, it is possible to specify a time within the editing material corresponding to this arbitrary location. The process item specification buttons 84 are for carrying out a specification operation when executing the processing of the respective process items. In the example of Fig. 8, since the terminal device 20 received "A (a1, a2, a3), B (b1, b2), D (a1, d2), E (e1, e2, e3, e4)" as the GUI program elements comprising the GUI program, process item specification buttons 84 for executing the processing of process items A, B, D and E are displayed. The terminal device 20 is idle while the menu screen is being displayed on the display.

The terminal device 20 determines whether or not an edit process instruction input has been received from the user via the input device 204 (S606). This edit process instruction input is carried out by selecting and inputting the process item specification button 84 on the menu screen displayed on the display.

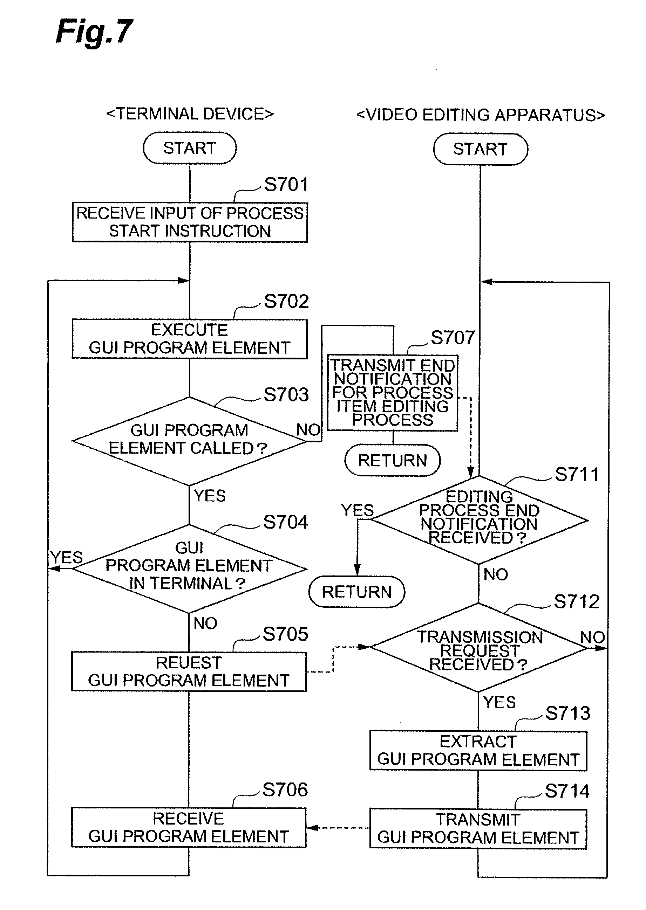

When the terminal device 20 determines that an edit process instruction input has been received (S606), the terminal device 20 performs the processing corresponding to the process item of the inputted process item specification button 84 (S607). The edit processing carried out at this time is specifically for deciding the contents of the edit instruction information for editing the video content in the video editing apparatus 10. This processing will be explained below using Fig. 7 together with the GUI program element transmission process (S624) carried out in the video editing apparatus 10.

When the processing corresponding to the process item has ended, the GUI program executing portion 24 of the terminal device 20 creates the edit instruction information for editing the video content in the video editing apparatus (S608). The GUI program executing portion 24 sends the created edit instruction information to the transmitter/receiver portion 22.

The terminal device transmitter/receiver portion 22 transmits the edit instruction information sent from the GUI program executing portion 24 to the video editing apparatus 10 (S609).

Meanwhile, the transmitter/receiver portion 11 of the video editing apparatus 10 determines whether or not the edit instruction information transmitted from the terminal device 20 has been received (S625). When the edit instruction information has been received, processing proceeds to Step S626.

When the video editing apparatus 10 transmitter/receiver portion 11 has received the edit instruction information (S625), the edit processing portion 16 acquires this edit instruction information, and carries out the editing of the video content on the basis of this edit instruction information (S626).

In the terminal device 20, a determination is made as to whether or not the input of a video editing program end instruction has been received from the user (S610). When an end instruction input has not been received, processing proceeds to Step S606.

When the terminal device 20 has received an end instruction input, the transmitter/receiver portion 22 transmits to the video editing apparatus 10 a notification to the effect end the video editing program. Next, the terminal device 20 ends processing.

When the video editing apparatus 10 receives the notification to the effect end the video editing program from the terminal device 20 (S627), the video editing apparatus 10 ends processing. Conversely, when the video editing apparatus 10 has not received this notification, processing returns to S625 (S627).

Next, the process for the terminal device 20 to decide the contents of the edit instruction information (S607), and the GUI program element transmission process (S624) of the video editing apparatus 10 will be explained by referring to Fig. 7.

First, the terminal device 20 receives an edit process instruction input from the user via the input device 204 (S701). This edit process instruction input is carried out by selecting and inputting a process item specification button 84 in the menu screen being displayed on the display.

The GUI program executing portion 24 executes the GUI program element corresponding to the edit process instruction input (S702).

The GUI program executing portion 24 determines whether or not the process executed by the GUI program element comprises a call instruction process for calling the other GUI program element (S703). When it is determined that the call instruction process is not included, processing jumps to Step S707.

The GUI program executing portion 24 transmits to the video editing apparatus 10 via the transmitter/receiver portion 22 a notification to the effect that the edit process corresponding to the process item has ended, and ends the processing of Step S607.

When the video editing apparatus 10 receives from the terminal device 20 the notification to the effect that edit processing has ended (S711), the video editing apparatus 10 ends the GUI program element transmission process (S624). When the video editing apparatus 10 does not receive the notification to the effect that edit processing has ended (S711), processing proceeds to Step S712.

When a determination is made that the process being executed by the GUI program element comprises a call instruction process for calling the other GUI program element (S703), the GUI program executing portion 24 determines whether or not this other GUI program element is stored in the GUI program storage portion 25 (S704). When the determination is that this other GUI program element is stored in the GUI program storage portion 25, processing returns to Step S702.

When the determination is that this other GUI program element is not stored in the GUI program storage portion 25 (S704), the GUI program managing portion 23 transmits a request for the transmission of this other GUI program element to the video editing apparatus 10 via the transmitter/receiver portion 22 (S705).

The transmitter/receiver portion 11 of the video editing apparatus 10 determines whether or not the GUI program element transmission request has been received (S712), and when it is determined that the transmission request has been received, the transmitter/receiver portion 11 sends this transmission request to the GUI program transmitting portion 14. When the determination is that the transmission request was not received, processing returns to Step S711.

The GUI program transmitting portion 14 extracts the GUI program element in response to the acquired transmission request from the GUI program storage portion 15 (S713).

The GUI program transmitting portion 14 transmits the extracted GUI program element to the terminal device 20 via the transmitter/receiver portion 11 (S714).

The transmitter/receiver portion 22 of the terminal device 20 receives the GUI program element transmitted from the video editing apparatus 10, and stores the received GUI program element in the GUI program storage portion 25 by way of the GUI program managing portion 23 (S706). The GUI program executing portion 24 executes the GUI program element received in Step S706 (S702).

Furthermore, when the process executed by the one GUI program element comprises a call instruction process for calling the other GUI program element, the transmission of this other GUI program element transmission request is not limited to subsequent to the end of the execution of the one GUI program element (S702). For example, the transmission of the transmission request for the other GUI program element can be carried out at an arbitrary timing during the execution of the one GUI program element. This arbitrary timing, for example, can be defined as the time when the value representing the load on the CPU 201 of the terminal device 20 is not greater than a prescribed value.

Next, a specific example of the processing carried out when, for example, the GUI program storage portion 25 stores the GUI program elements "b1, b2", and button "B" of the process item specification buttons 84 for executing the processing of process item B is selected will be explained.

First, button "B" of the process item specification buttons 84 is selected and inputted (S701). Next, the GUI program executing portion 24 fetches the GUI program element "b1" from the GUI program storage portion 25, and executes the fetched GUI program element "b1" (S702). Since the process being executed by the GUI program element "b1" comprises a call instruction process for calling GUI program element "b2" (refer to Fig. 3), processing proceeds to Step S704 (S703). Because the GUI program element "b2" is stored in the GUI program storage portion 25, processing returns to Step S702.

Next, the GUI program executing portion 24 fetches the GUI program element "b2" from the GUI program storage portion 25, and executes the fetched GUI program element "b2" (S702). Since the process being executed by the GUI program element "b2" comprises a call instruction process for calling GUI program element "b3", processing proceeds to Step S704 (S703). Because the GUI program element "b3" is not stored in the GUI program storage portion 25, processing proceeds to Step S705 (S704).

Next, the GUI program managing portion 23 transmits to the video editing apparatus 10 via the transmitter/receiver portion 22 a request for the transmission of GUI program element "b3" (S705). The transmitter/receiver portion 11 of the video editing apparatus 10 receives the GUI program element "b3" transmission request, and sends the received transmission request to the GUI program transmitting portion 14 (S712). The GUI program transmitting portion 14 extracts the GUI program element "b3" from the GUI program storage portion 15 (S713). The GUI program transmitting portion 14 transmits the GUI program element "b3" to the terminal device 20 via the transmitter/receiver portion 11 (S714).

Furthermore, the transmitter/receiver portion 22 of the terminal device 20 receives GUI program element "b3" transmitted from the video editing apparatus 10, and stores GUI program element "b3" in the GUI program storage portion 25 by way of the GUI program managing portion 23 (S706). The GUI program executing portion 24 executes GUI program element "b3" (S702). Since the process being executed by the GUI program element "b3" does not comprise a call instruction process for calling the other GUI program element (S703), the terminal device transmitter/receiver portion 22, subsequent to transmitting to the video editing apparatus 10 a notification to the effect end the processing corresponding to process item B (S707), ends the processing for executing the process item B process. Upon receiving this notification (S711), the video editing apparatus 10 ends processing.

According to this embodiment, the video editing apparatus 10 stores in the GUI program table 13 the attribute information denoting the processing capabilities of the terminal device 20, in association with the configuration of the GUI program elements suited to the attribute information-denoted processing capabilities. The video editing apparatus 10 extracts the GUI program element corresponding to the attribute information received from the terminal device 20, and transmits the extracted GUI program element to the terminal device 20, thereby providing the terminal device 20 with a GUI program that corresponds to the processing capabilities thereof Thus, since the terminal device 20 can execute a GUI program that falls within the scope of the processing capabilities thereof, the terminal device 20 is able to create editing instruction information for the video editing apparatus 10. Therefore, it becomes possible for the video editing apparatus 10 to perform appropriate video editing corresponding to the processing capabilities of the terminal device 20.

Further, according to this embodiment, when the other GUI program element is required during the execution of the one GUI program element, the one GUI program element comprises a call instruction process for calling the other GUI program element. When this call instruction process is executed, the terminal device 20 requests that the video editing apparatus 10 transmit the other GUI program element. The video editing apparatus 10 transmits the other GUI program element to the terminal device 20 in response to this request. Thus, the terminal device 20 is able to sequentially receive the GUI program elements required to create edit instruction information. Therefore, it becomes possible for the terminal device 20 to commence the process of creating a certain edit instruction information upon receiving a portion of the GUI program elements without having to receive all the GUI program elements of the GUI program elements required for carrying out this processing at the start of processing. Further, because the acquisition of the other GUI program element is carried out independent of a user operation, the user can carry out the inputting operation for creating the edit instruction information without having to be concerned about the level of processing capabilities of the terminal device 20.

## Claims

1. A video editing apparatus for editing video content on the basis of edit instruction information from a terminal device connected thereto via a network, comprising:
attribute information receiving means for receiving attribute information denoting the processing capabilities of the terminal device;
GUI program storage means for storing the attribute information of the terminal device in association with a GUI program for the terminal device to create edit instruction information;
GUI program extracting means for referring to the GUI program storage means and extracting the GUI program associated with the attribute information received by the attribute information receiving means; and
GUI program transmitting means for transmitting the GUI program extracted by the GUI program extracting means to the terminal device.

2. The video editing apparatus according to Claim 1, wherein the GUI program comprises a plurality of GUI program elements, and
the GUI program storage means stores a GUI program comprising a GUI program element that differs from the GUI program element included in a certain GUI program.

3. The video editing apparatus according to Claim 2, further comprising:
transmission request receiving means for receiving a GUI program element transmission request; and
GUI program element transmitting means for extracting the GUI program element based on the received transmission request, and transmitting same to the terminal device.

4. The video editing apparatus according to any one of Claims 1 through 3, wherein the attribute information comprises at least one of a CPU operating frequency and a memory capacity.

5. A terminal device for transmitting edit instruction information via a network to a video editing apparatus for editing video content, comprising:
attribute information transmitting means for transmitting attribute information of the terminal device to the video editing apparatus;
GUI program receiving means for receiving a GUI program for creating the edit instruction information transmitted in response to the attribute information transmitted by the attribute information transmitting means; and
GUI program executing means for executing the GUI program received by the GUI program receiving means.

6. The terminal device according to Claim 5, wherein the GUI program comprises a plurality of GUI program elements,
processing executed by one of the GUI program elements comprises a call instruction process for calling another GUI program element,
the terminal device further comprises:
transmission requesting means for transmitting to the video editing apparatus a request for the transmission of the other GUI program element when the GUI program executing means executes the call instruction process; and
GUI program element receiving means for receiving the other GUI program element transmitted in response to the transmission request, and
the GUI program executing means executes the received other GUI program element.

7. A GUI program transmission method for a video editing apparatus for editing video content on the basis of edit instruction information from a terminal device connected thereto via a network, wherein the video editing apparatus executes:
an attribute information receiving step of receiving attribute information denoting the processing capabilities of the terminal device;
a GUI program extracting step of referring to GUI program storage means for storing the attribute information of the terminal device in association with a GUI program for the terminal device to create edit instruction information, and extracting the GUI program associated with the attribute information received in the attribute information receiving step; and
a GUI program transmitting step of transmitting the GUI program extracted in the GUI program extracting step to the terminal device.
